# EUROPÄISCHE PATENTSCHRIFT

(11) **EP 3 362 529 B1**
(45) Veröffentlichungstag und Bekanntmachung des Hinweises auf die Patenterteilung: **10.05.2023**
(21) Anmeldenummer: 16787759.6
(22) Anmeldetag: 13.10.2016
(51) Int. Cl.: C09J 153/02, C09J 7/38, C08L 91/00, C09J 109/00, C09J 109/06

(54) **KLEBEMASSE, INSBESONDERE FÜR STRIPBARE KLEBESTREIFEN UND VERWENDUNG ZUR VERKLEBUNG AUF GESTRICHENER RAUFASERTAPETE**
ADHESIVE MASS, IN PARTICULAR FOR STRIPPABLE ADHESIVE STRIPS AND USE FOR ADHERING ON COATED WOODCHIP WALLPAPER
COMPOSITION ADHÉSIVE, EN PARTICULIER POUR BANDES ADHÉSIVES DÉTACHABLES, ET SON UTILISATION POUR ADHÉRER À DU PAPIER PEINT D'APPRÊT POSÉ

(30) Priorität: 15.10.2015 DE 102015220065
(43) Veröffentlichungstag der Anmeldung: 22.08.2018
(73) Patentinhaber: tesa SE, 22848 Norderstedt (DE)
(72) Erfinder: DOLLASE, Thilo, 22397 Hamburg (DE); ALTENWEGNER, Tanja, 20357 Hamburg (DE); GARBERS, Julia, 22159 Hamburg (DE)
(74) Vertreter: tesa SE
(86) Internationale Anmeldenummer: PCT/EP2016/074547
(87) Internationale Veröffentlichungsnummer: WO 2017/064167

(56) Entgegenhaltungen:
- DE-A1-102008 023 741
- DE-A1-102008 038 471
- DE-A1-102013 206 624
- DE-U1-202015 009 135

## Beschreibung

Die vorliegende Erfindung betrifft die Verwendung einer Klebemasse auf Basis von Polybutadien-Polyvinylaromaten-Blockcopolymeren, ein Klebeband mit dieser Klebemasse sowie ein Verbund aus zwei Substraten und einem zwischen den Substraten verklebten derartigen Klebeband.

Klebemassen mit hoher Kleb- und Halteleistung, die sich durch dehnendes Verstrecken rückstandsfrei von einem Verklebungsuntergrund ablösen lassen, sind bekannt. Klebemassen hierfür können vorteilhaft auf Basis von Vinylaromaten-Blockcopolymeren und Klebharzen formuliert werden.

Zu den vielfältigen Anwendungen von Klebestreifen mit solchen Klebemassen zählen Verklebungen auf Wänden, und zwar nicht nur auf glatten, ebenen Untergründen, sondern gerade auch auf beliebigen raueren Flächen wie Putz, Holz, Raufasertapete, insbesondere gestrichener Raufasertapete, anderen Strukturtapeten, Paneelen oder Wandtafeln. Auch hier besteht der Wunsch, Gegenstände auch mit hohem Gewicht zu befestigen, ohne den Untergrund (die Wand) zu beschädigen. Bei der Verklebung, z.B. auf gestrichener Raufasertapete, treten jedoch im Vergleich zu vielen anderen Untergründen vor allem drei besondere Herausforderungen auf: (a) Raufasertapete stellt einen nicht glatten Verklebungsuntergrund dar, (b) die Oberfläche der Raufasertapete ist üblicherweise mit einer Anstreichfarbe versehen, die durch Bindemittel und/oder Additive bedingt eine geringe Oberflächenenergie aufweisen kann, (c) insbesondere Raufasertapete stellt einen relativ leicht spaltbaren Verklebungsuntergrund dar, der beim Wiederablösen nicht beschädigt werden soll. Je nach Art der Anstreichfarbe können die Oberflächeneigenschaften stark variieren. Ein weiterer Aspekt ist der Feuchtegehalt der gestrichenen Raufasertapete, die von der Tages-/Jahreszeit und der geographischen Region abhängt und entsprechend auch temporären Schwankungen unterliegen kann. Für andere der oben angeführten beispielhaften Untergründe gelten alle oder einige dieser Herausforderungen in ähnlicher Weise. Hierfür sind geeignete Klebemassen gesucht. Gesucht sind zudem Klebestreifen mit Klebemassen mit hoher Kleb- und Halteleistung, die sich durch dehnendes Verstrecken rückstandsfrei und möglichst zerstörungsfrei von gestrichenem Putz oder anderen rauen Oberflächen ablösen lassen.

Elastisch oder plastisch hochdehnbare Haftklebestreifen, welche sich durch dehnendes Verstrecken in der Verklebungsebene rückstands- und zerstörungsfrei wieder ablösen lassen, sind beispielsweise aus US 4,024,312 A, DE 33 31 016 C2, WO 92/01132 A1, WO 92/11333 A1, DE 42 22 849 A1, WO 95/06691 A1, DE 195 31 696 A1, DE 197 08 366 A1, DE 196 49 727 A1, DE 196 49 728 A1, DE 196 49 729 A1, DE 197 08 364 A1, DE 197 20 145 A1, DE 198 20 854 A1 und DE 100 03 318 A1 bekannt und werden nachfolgend auch als stripfähige Haftklebestreifen oder einfach als (Klebe-)strips bezeichnet. Besonders vorteilhaft sind für diese Klebeprodukte Styrol-Blockcopolymer-haltige Formulierungen einsetzbar.

Die Anwendung, Klebestreifen auf Raufasertapete zu verkleben, ist grundsätzlich ebenfalls vorbeschrieben und eine typische Anwendung im privaten Haushalt und in Büros.

DE 10 2004 030 252 A1 beschreibt ein Hakensystem zur Befestigung auf einem rauen Untergrund, das es erlaubt, den Klebestreifen zerstörungsfrei von der empfindlichen Oberfläche abzulösen. Spezielle Ausgestaltungen der Klebemasse des durch dehnendes Verstrecken wiederablösbaren Klebestrips werden nicht gegeben.

EP 845 513, EP 845 514 und EP 878 526 beschreiben Anforderungen bei der Verklebung auf rauen Untergründen und führen aus, dass mit den zuvor genannten Selbstklebebändern auf glatten und festen Untergründen im Allgemeinen hohe Verklebungsfestigkeiten erreicht werden können. Auf rauen Untergründen ist die Verklebungsfestigkeit insbesondere für Produkte von geringer Dicke, jedoch auch für Selbstklebebänder höherer Schichtstärke, für zahlreiche Anwendungen ungenügend. Als Ursache für die unzureichende Verklebungsfestigkeit wird eine nicht ausreichende Verklebungsfläche, bedingt durch eine zu niedrige Konformabilität der Klebebänder an raue und unregelmäßige Oberflächen angenommen. Als Lösung schlägt EP 845 513 A2 die Verwendung spezieller Schaumträger in den Klebeprodukten vor. Als Haftklebemassen finden bevorzugt solche auf Basis von Blockcopolymeren enthaltend Polymerblöcke gebildet von Vinylaromaten, bevorzugt Styrol, und solchen gebildet durch Polymerisation von 1,3-Dienen, bevorzugt Butadien und Isopren Anwendung. Solche Blockcopolymere können mit unterschiedlicher Architektur eingesetzt werden, so können auch Diblockcopolymere vorhanden sein. Typische Einsatzkonzentrationen für die Styrolblockcopolymere liegen im Bereich zwischen 15 Gew.% und 75 Gew.%, bevorzugt im Bereich zwischen 30 Gew.% und 60 Gew.% besonders bevorzugt im Bereich zwischen 35 Gew.% und 55 Gew.%. Es wird keine Angabe zum Anteil von Diblockcopolymeren im Verhältnis zum Gesamtblockcopolymergehalt gemacht. Eine beispielhafte Klebemasse setzt sich aus einem Gemisch eines Polystyrol-Polybutadien-Blockcopolymers (Vector 8508), eines Polystyrol-Polyisopren-Blockcopolymers (Vector 4211) und eines Esters eines teilhydrierten Kolophoniums als Klebharz zusammen. Diese Blockcopolymere weisen im Wesentlichen keine Diblockcopolymere auf.

US 6,231,962 B1 und US 6,403,206 B1 beschreiben ebenfalls doppelseitige Klebestrips mit einem Schaumträger. Als Verklebungsuntergründe für Verklebungsanwendungen werden empfindliche, leicht spaltbare Untergründe wie lackierte Wandplatten angegeben, jedoch keine besonders rauen wie gestrichene Raufasertapete. Als Klebemasse können Styrol-Blockcopolymer-basierende Formulierungen zum Einsatz kommen. In konkreten Beispielformulierungen wird typischerweise Mineralöl als Weichmacher genutzt. Dies ist bei der Anwendung auf Raufasertapete aber nachteilig, da ein Durchfetten des Untergrunds auftreten kann, was nach Entfernung des Klebestreifens optisch erkennbar bleiben kann.

EP 1 988 144 A1 schlägt Klebemassen vor, die in Bezug auf die Gesamtharzmenge mindestens 40 % eines Weichharzes enthalten. Genannte Anwendungen umfassen die Verklebung von leichten (Papiere) bis mittelschweren Objekten auf Raufasertapete. Hohe Halteleistungen sind nicht Ziel solcher Formulierungen sondern die Möglichkeit, die Verklebung auch von Raufasertapete durch dehnendes Verstrecken oder Schälen zu lösen. Der Diblockgehalt der Elastomere wird nicht speziell beansprucht. Die Beispiele beschreiben Formulierungen, die entweder einen Diblockgehalt von > 45 % (Beispiel 1) oder < 30 % (Beispiele 2-4) aufweisen.

US 7,276,272 B2 beschreibt doppelseitig klebende Klebestrips, die auch von empfindlichen Untergründen wie Putz, Farbe oder Tapete wieder abgelöst werden können. Es sind keine Verklebungsuntergründe mit besonders ausgeprägter Rauigkeit angegeben. Zudem wird für Klebemassen lediglich Bezug genommen auf frühere allgemeine Schriften zu stripbaren Klebeprodukten (US 4,024,312, US 5,516,581, US 6,231,962 und DE 33 31 016).

WO 2002/038692 A2 beschreibt durch dehnendes Verstrecken in der Verklebungsebene rückstands- und zerstörungsfrei wieder ablösebare Klebeprodukte mit einer Klebemasse basierend auf Styrol-Blockcopolymeren mit speziellen Alterungsschutzmitteln, die eine verringerte Verfärbungsneigung auf dem Verklebungsuntergrund aufweisen. Für diese Produkte wird eine Verklebung z. B. auf gestrichener Raufasertapete beschrieben. Die Schrift offenbart keine Polystyrol-Polybutadien-Blockcopolymer-haltigen Klebemassen mit speziellem Verhältnis aus Triblockcopolymer und Diblockcopolymer.

DE 10 2007 063 083 A1 beschreibt auf Styrol-Blockcopolymeren basierende Klebemassen für unpolare Untergründe. Zu diesem Zweck wird den dort beschriebenen Klebemassen ein hoher Anteil eines Weichharzes zugegeben. Beansprucht werden mindestens 30 % bezogen auf die Gesamtharzmenge. Zudem enthält die Klebemasse zumindest zwei Blockcopolymere, von denen das erste ein Diblockcopolymer ist und das zweite ein Multiblockcopolymer, im einfachsten Fall ein Triblockcopolymer sein kann. Der Diblockanteil bezogen auf den Gesamtblockcopolymergehalt liegt bei mindestens 50 %. Durch dehnendes Verstrecken in der Verklebungsebene rückstands- und zerstörungsfrei wieder ablösebare Klebeprodukte basierend auf solchen Klebemassen sind in der Schrift nicht genannt, ebenso nicht die Verwendung auf rauen Untergründen.

WO 2000/024840 A1 beschreibt auf Styrol-Blockcopolymeren basierende Klebemassen für unpolare Untergründe. Die Klebemasse enthält zumindest zwei Blockcopolymere, von denen das erste ein Diblockcopolymer ist und das zweite ein Multiblockcopolymer, im einfachsten Fall ein Triblockcopolymer sein kann. Der Diblockanteil bezogen auf den Gesamtblockcopolymergehalt liegt bei mindestens 40 % und höchstens 95 %. Verklebung auf rauen Untergründen und Klebeprodukte, die durch dehnendes Verstrecken in der Verklebungsebene rückstands- und zerstörungsfrei wieder ablösbar sind, werden nicht genannt. Explizit genannte Formulierungen enthalten stets Mineralöl, was auf Raufasertapete zur Gefahr des Durchfettens führt.

DE 10 2013 206 624 A1 beschreibt durch dehnendes Verstrecken in der Verklebungsebene rückstands- und zerstörungsfrei wieder ablösebare Klebeprodukte mit einer Klebemasse basierend auf Styrol-Blockcopolymeren, bei denen Transparenz und Ozonstabilität besonders sind. Es können Gemische aus Triblockcopolymeren und Diblockcopolymeren genutzt werden. Der Diblockcopolymeranteil im Gesamtblockcopolymergehalt liegt bei höchstens 50 %. Kippscherbelastung auf Raufasertapete wird nicht genannt. Explizite Beispiele weisen einen Diblockgehalt von < 30 % auf.

DE 10 2008 023 741 lehrt Styrolblockcopolymer-haltige Haftklebemassen mit einem Gesamtblockcopolymergehalt von mindestens 50 % zur Verklebung von Druckplatten. Anwendungen auf Raufasertapete und durch dehnendes Verstrecken durchgeführte Wiederablösbarkeit werden nicht genannt. Beispiele mit Polystyrol-Polybutadien Blockcopolymeren enthalten 60 % Elastomer bezogen auf die Klebemasse.

DE 10 2008 038471 A1 lehrt die Verwendung eines Klebebands zum Umwickeln von langgestrecktem Gut wie insbesondere Leitungen oder Kabelsätze mit einem Träger und einer darauf zumindest einseitig beschichteten insbesondere druckempfindlichen Klebemasse, wobei die Klebemasse mit expandierten Mikroballons geschäumt ist.

Es besteht weiterhin der Bedarf nach Klebemassen, die für durch dehnendes Verstrecken wiederablösbare Selbstklebestrips besonders gut für raue Untergründe, insbesondere auf gestrichener Raufasertapete, geeignet sind.

Gesucht sind daher Haftklebemassen für durch dehnendes Verstrecken wiederablösbare Selbstklebestreifen (-strips), insbesondere für die Verklebung auf spaltbaren und/oder rauen und/oder gestrichenen Untergründen mit hoher Verklebungs- und Halteleistung.

Diese Aufgabe wird gelöst durch die Verwendung spezieller Klebmasseformulierungen zur Verklebung auf Raufasertapete, insbesondere gestrichener Raufasertapete, Strukturtapeten, Holz, Paneelen, Wandtafeln, Vertäfelungen, Furnierhölzern oder auf Putz, insbesondere gestrichenem Putz, wobei die Klebemasseformulierungen folgendermaßen charakterisiert sind. Sie bestehen aus
(a) zumindest einer Elastomerkomponente vom Typ eines Polybutadien-Polyvinylaromaten-Blockcopolymers mit einem Anteil in Bezug auf die Gesamtklebemasse von 42 Gew.-% bis 50 Gew.-% und einem Diblockanteil in Bezug auf den Gesamtblockcopolymergehalt von 32 Gew.-% bis 55 Gew.-%, vorzugsweise bis 50 Gew.-%, wobei die Blockcopolymere eine gewichtsmittlere Molmasse nach Test I wie in der Beschreibung definiert zwischen 50 000 g/mol und 500 000 g/mol aufweisen,
(b) zumindest einem Klebharz, das ein Kohlenwasserstoffharz mit einem DACP-Wert von mindestens +5°C und höchstens +50°C und einem MMAP-Wert von mindestens +50°C und höchstens +85°C ist, und das eine Harzerweichungstemperatur nach Ring & Ball gemäß ASTM E28 von mindestens +90 °C aufweist,
(c) optional zumindest einem Weichharz mit einem Anteil von 0 Gew.-% bis 15 Gew.-%, bezogen auf die Gesamtklebemasse,
(d) optional weiteren Additiven.

"Bestehen aus" bzw. "bestehend aus" im Sinne der vorliegenden Erfindung bedeutet dabei, dass eine Formulierung oder Klebemasse nur die angeführten Verbindungen enthält und darüber hinaus keine weiteren Inhaltsstoffe vorhanden sind.

### (a) Elastomer (Blockcopolymer)

Als Elastomerkomponente (Blockcopolymerkomponente) kommt, vorzugsweise zu mindestens 90 Gew.-% (bezogen auf den Gesamtblockcopolymergehalt), ein Polybutadien-Polyvinylaromaten-Blockcopolymer oder ein Gemisch aus verschiedenen Polybutadien-Polyvinylaromaten-Blockcopolymeren zum Einsatz. Dieses Polybutadien-Polyvinylaromaten-Blockcopolymer beziehungsweise diese Polybutadien-Polyvinylaromaten-Blockcopolymere sind solche, die Polymerblöcke überwiegend gebildet von Vinylaromaten (A-Blöcke), bevorzugt Styrol, und solche überwiegend gebildet durch Polymerisation von 1,3-Butadien (B-Blöcke) enthalten. Polybutadien-Blockcopolymere (SBS) werden im Sinne dieser Erfindung auf Grund ihrer höheren Stabilität gegenüber äußeren Einflüssen wie z. B. Ozon im Vergleich zu Polyisopren-Blockcopolymeren (SIS) bevorzugt. SIS-haltige Formulierungen sind üblicherweise nicht 1:1 auf SBS-haltige und SIS-freie Formulierungen übertragbar, wenn ein vergleichbares mechanisches Eigenschaftsprofil erreicht werden soll. Will man auf SIS in der Formulierung verzichten und stattdessen mit SBS arbeiten, dann müssen die SBS-haltigen Formulierungen speziell angepasst werden, um das vorgegebene Eigenschaftsprofil zu erfüllen. Zumindest zum Teil lassen sich diese Unterschiede in der Weichheit von SIS und SBS (indiziert durch die Shore A Härte) erklären. Die Shore A Härte ist typischerweise für SIS geringer als für SBS Systeme.

Das Elastomergemisch enthält zumindest ein Polybutadien-Polyvinylaromaten-Blockcopolymer bestehend aus einem A-Block und einem B-Block, dem sogenannten Diblockcopolymer. Diblockcopolymere tragen zu Tack und Auffließvermögen der Klebemasse bei. Das Elastomergemisch enthält zudem ein Triblockcopolymer oder ein höheres Multiblockcopolymer mit zumindest zwei A-Blöcken und zumindest einem B-Block. Dieses kann als Triblockcopolymer eine lineare A-B-A-Struktur aufweisen. Einsetzbar sind ebenfalls Blockcopolymere von radialer Gestalt sowie sternförmige und lineare Multiblockcopolymere. Triblock- und Multiblockcopolymere tragen zu Kohäsion und Zugfestigkeit der Klebemasse bei. Es können mehrere verschiedene Diblockcopolymere eingesetzt werden. Es können mehrere Triblock- und/oder Multiblockcopolymere eingesetzt werden. Der Gesamtblockcopolymergehalt in der Klebemasse liegt bei mindestens 42 Gew.-% und bei höchstens 50 Gew.-%. Deutlich geringere Anteile an Elastomer führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich höhere Anteile an Elastomer führen zu einem Abfall an Verklebungsfestigkeit, insbesondere auf unpolaren Untergründen wie zum Beispiel unpolarer Anstreichfarbe. Der Anteil an Diblockcopolymeren bezogen auf den Gesamtblockcopolymergehalt in der Klebemasseformulierung liegt bei mindestens 32 Gew.-% und bei höchstens 55 Gew.-%, bevorzugt bei höchstens 50 Gew.-%. Deutlich höhere Diblockanteile führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich geringere Diblockanteile führen zu einem Abfall an Verklebungsfestigkeit, insbesondere auf unpolaren Untergründen wie zum Beispiel unpolarer Anstreichfarbe. Entsprechend beträgt der Anteil an Tri- oder höherem Multiblockcopolymer von 45 Gew.- % bis 68 Gew.-%, vorzugsweise 50 Gew.-% bis 68 Gew.-% in Bezug auf den Gesamtblockcopolymergehalt. Unter den Tri- oder höheren Multiblockcopolymeren sind die Triblockcopolymere besonders bevorzugt.

Die gewichtsmittlere Molmasse (gemessen nach Test I) der Blockcopolymere liegt zwischen 50 000 g/mol und 500 000 g/mol, bevorzugt zwischen 75 000 g/mol und 200 000 g/mol. Der Anteil an Vinylaromatenblock in den Blockcopolymeren kann von Blockcopolymersorte zu Blockcopolymersorte in der Formulierung unterschiedlich sein, liegt aber typischerweise bei mindestens 15 Gew.-%, bevorzugt bei mindestens 25 Gew.- % und höchstens bei 40 Gew.-%, bevorzugt höchstens bei 35 Gew.-%. Ein zu geringer Polyvinylaromatenanteil führt zu unzureichender physikalischer Vernetzung, die in den Polybutadien-Blockcopolymeren durch Mikrophasenseparation geschaffen wird. Die physikalische Vernetzung ist für die Halteleistung und die Reißfestigkeit wichtig. Bei einem zu hohen Polyvinylaromatenanteil dagegen verliert die Klebemasse an Klebrigkeit. Vorzugsweise besitzen die Blockcopolymere der Haftklebmassen als A-Blöcke Polystyrolendblöcke. Anstelle der bevorzugten Polystyrolblöcke können als Vinylaromaten auch Polymerblöcke auf Basis anderer aromatenhaltiger Homo- und Copolymere (bevorzugt C₈- bis C₁₂-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein. Glasübergangstemperaturen werden nach Test II bestimmt.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 40 °C, insbesondere mindestens 60 °C und für B-Blöcke bis zu höchstens -50 °C, insbesondere höchstens -80 °C) wider. Diese Angaben beziehen sich auf die reinen, unabgemischten Blockcopolymere.

Die aus den A- und B-Blöcken resultierenden Polybutadien-Blockcopolymere können gleiche oder unterschiedliche B-Blöcke enthalten und zwar im Hinblick auf Mikrostruktur (relatives Verhältnis der für Polybutadien möglichen Monomerverknüpfungsarten 1,4-cis, 1,4-trans, 1,2-vinyl: bevorzugt ist ein 1,4-Anteil (cis + trans) von > 75 %, sehr bevorzugt von > 85 % bezogen auf die Polybutadienblöcke und ein 1 ,4-cis-Anteil von > 40 % bezogen auf die Polybutadienblöcke) und/oder Kettenlänge. Ein hoher Anteil an 1,4-Verknüpfung und insbesondere 1,4-cis-Verknüpfung der Monomereinheiten in den PolybutadienBlöcken führt zu vorteilhafter Zug/Dehnungs-Charakteristik, so dass eine ausreichende Dehnbarkeit resultiert, die insbesondere für das unter Verstreckung rückstandsfreie Wiederablösen wichtig ist. Die 1,2-vinyl-Einheiten können hydriert sein. Die 1,4-Einheiten sind vorteilhafterweise im Wesentlichen nicht hydriert.

### (b) Klebharz

Klebharze sind spezielle Verbindungen mit im Vergleich zu den Elastomeren niedriger Molmasse, üblicherweise mit einem Molekulargewicht (Test I) M_{W} < 5000 g/mol. Typischerweise beträgt das Molekulargewicht M_{W} von 500 bis 5 000 g/mol, bevorzugt von 500 bis 2 000 g/mol. Das zumindest eine Klebharz weist einen DACP-Wert (nach Test III) von mindestens etwa +5 °C und höchstens etwa +50°C, bevorzugt von höchstens etwa +45 °C, sowie einem MMAP-Wert (nach Test IV) von mindestens etwa +50 °C und höchstens etwa +85 °C, bevorzugt von höchstens etwa +80 °C auf. Bei entsprechend ausgewählten Klebharzen ist Kompatibilität mit den Polybutadienblöcken und Inkompatibilität mit Polyvinylaromatenblöcken in im Sinne dieser Erfindung günstiger Ausprägung zu erwarten. Das Klebharz weist eine Harzerweichungstemperatur (nach Test V) von mindestens etwa 90 °C, bevorzugt von mindestens etwa 110 °C, und höchstens +140 °C, bevorzugt von höchstens +120 °C auf. Bei dem verwendeten zumindest einen Klebharz handelt es sich vorteilhaft um ein Kohlenwasserstoffharz.

Zu hohe Polarität (zu geringe DACP-Werte) führt zu beginnender Verträglichkeit mit den Vinylaromatenblöcken, was zu Reduktion der Kohäsion und damit der Zugfestigkeit führen kann. Zu geringe Polarität (zu hohe DACP-Werte) führt zu Inkompatibilität des Klebharzes mit dem Weichblock und damit zu einem Verlust von Haftklebrigkeit.

Zu hohe Aromatizität (zu geringe MMAP-Werte) führt zu beginnender Verträglichkeit mit den Vinylaromatenblöcken, was zu Reduktion der Kohäsion und damit der Zugfestigkeit führen kann. Zu geringe Aromatizität (zu hohe MMAP-Werte) führt zu Inkompatibilität des Klebharzes mit dem Weichblock und damit zu einem Verlust von Haftklebrigkeit.

Die Harze werden bevorzugt aus den Harzklassen der (teil)hydrierten aromatisch modifizierten C5-Harze, der Polyterpen-Harze (hergestellt aus α-Pinen, β-Pinen, δ-Limonen oder Gemischen dieser Ausgangsstoffe), der teilhydrierten C9-Harze, der (teil)hydrierten aromatisch modifizierten α-Pinen-Harze, der (teil)hydrierten aromatisch modifizierten β-Pinen-Harze, der (teil)hydrierten aromatisch modifizierten δ-Limonen-Harze und der (teil)hydrierten aromatisch modifizierten Dipenten-Harze gewählt. Bei der aromatischen Modifizierung wird Styrol bevorzugt. Sehr bevorzugt werden Polyterpene-Harze.

### (c) Optionale Weichharze

Das optional einsetzbare Weichharz dient zur finalen Feineinstellung der Kohäsions-/Adhäsions-Balance. Es handelt sich dabei sehr bevorzugt um ein Weichharz oder Weichharzgemisch mit einer Schmelzviskosität bei 25 °C und 1 Hz von zumindest 25 Pa*s, bevorzugt von zumindest 50 Pa*s und einer Erweichungstemperatur von < 25 °C. Die Schmelzviskosität wird nach Test VI bestimmt. Bei dem Weichharz kann es sich um ein Kolophonium basierendes oder sehr bevorzugt um ein Kohlenwasserstoff basierendes Weichharz handeln. Das Weichharz oder das Weichharzgemisch kommt in Bezug auf die Gesamtklebmasseformulierung mit einem Anteil von 0 Gew.-%, bevorzugt von mindestens 5 Gew.-% und höchstens 15 Gew.-%, besonders bevorzugt höchstens 12 Gew.-%, bezogen auf die Gesamtklebemassezusammensetzung zum Einsatz. Ein zu hoher Anteil an Weichharz führt zu einer Verringerung der Kohäsion, was sich in der Halteleistung und in der Zugfestigkeit zeigt.

Übliche niederviskose Weichmacher wie Mineralöle sind im Sinne dieser Erfindung unvorteilhaft. Ihr Anteil in der Gesamtrezeptur liegt bei vorzugsweise höchstens 1 Gew.-%, sehr bevorzugt wird auf solche Weichmacher vollständig verzichtet. Nachteilig an Weichmachern geringer Viskosität ist die Gefahr, dass saugfähige Verklebungsuntergründe wie Raufasertapete durchfettet werden können. Nach Wiederablösen des Klebestreifens bleibt ein unerwünschter optischer Eindruck an der Verklebungsstelle zurück.

### (d) Optionale weitere Additive

Der Klebemasse können als weitere Additive vor allem Schutzmittel zugesetzt werden. Hier seien Alterungsschutzmittel primärer und sekundärer Art, Licht- und UV-Schutzmittel sowie Flammschutzmittel genannt und auch Füllstoffe, Farbstoffe und Pigmente. Die Klebemasse kann so beliebig gefärbt oder weiß, grau oder schwarz sein.

Typische Einsatzmengen für ein Additiv liegen bei bis zu 1 Gew.-% bezogen auf die Gesamtklebemassezusammensetzung. Besonders vorteilhaft sind Alterungsschutzmittel, die keine farbigen Rückstände auf Verklebungsuntergründen zurücklassen (siehe hierzu den Stand der Technik von EP 1 341 862 B1).

Füllstoffe können höher dosiert werden, und zwar typischerweise zu einem Anteil von bis 5 Gew.-% bezogen auf die Gesamtklebemassezusammensetzung.

Als Additive können typischerweise genutzt werden:
- primäre Antioxidantien wie zum Beispiel sterisch gehinderte Phenole
- sekundäre Antioxidantien, wie zum Beispiel Phosphite oder Thioether
- Prozessstabilisatoren wie zum Beispiel C-Radikalfänger
- Flammschutzmittel
- Lichtschutzmittel wie zum Beispiel UV-Absorber oder sterisch gehinderte Amine
- Farbstoffe und/oder Pigmente (wie z. B. Ruß)
- Verarbeitungshilfsmittel
- (Nano)Füllstoffe wie zum Beispiel Siliziumdioxid, Aluminiumoxid, Titandioxid oder Schichtsilikate, ebenso Farbpigmente und Farbstoffe (für transparente aber gezielt gefärbte Ausgestaltungen) sowie optische Aufheller
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

Die Auswahl von Additiven beschränkt sich vorzugsweise auf die oben genannten.

Erfindungsgemäße Formulierungen weisen folgendes Eigenschaftsprofil auf:

| *Eigenschaft* | *Physikalische Messgröße* | *Einheit* | *Wert(ebereich)* | *Messmethode* |
|---|---|---|---|---|
| Kohäsion | Kippscherstandzeit auf Tapete | Tage (d) | ≥ 20 Tage | Test VII |
| | Scherstandzeit 40 °C | Minuten | ≥ 5000 min | Test VIII |
| Adhäsion | Klebkraft PE | N/cm | ≥ 5,0 N/cm | Test IX |
| Ablöseverhalten | Stripkraft | N/cm | ≤ 14 N/cm | Test X |

Für stripbare Selbstklebeprodukte ist zudem die Reißerbeständigkeit wichtig, so dass gewährleistet werden kann, dass das Klebeprodukt beim Ablösen durch dehnendes Verstrecken nicht reißt. Ein Indiz hierfür ist die Zugfestigkeit (Test XI). Diese sollte vorteilhaft bei mindestens 5,0 MPa liegen, bevorzugt bei mindestens 8,0 MPa. Eine Zugfestigkeit von mindestens 8,0 MPa ist erforderlich, wenn die Klebeprodukte eine vergleichsweise geringe Schichtstärke der erfindungsgemäßen Klebeformulierung aufweisen (z. B. kleiner als 500 µm). Ergänzend kann in das Selbstklebeprodukt eine weitere Schicht eingeführt werden, z. B. ein Trägermaterial oder eine weitere Klebemasseschicht, die eine höhere Zugfestigkeit mitbringt. In diesem Fall kann die Zugfestigkeit der Klebeformulierung auch geringer sein. Zudem hängt die Reißerbeständigkeit von der Stripkraft ab. Je höher diese ist, desto höher sind auch die Anforderungen an die Zugfestigkeit des Selbstklebeprodukts. Umgekehrt erlauben Selbstklebeprodukte mit geringerer Stripkraft Zugfestigkeiten, die auf einem geringeren Niveau liegen. Geringere Stripkräfte erlauben zudem ein schonenderes Wiederablösen von empfindlichen Haftuntergründen wie Raufasertapete oder Putz, so dass Zerstörung beim Ablösen effektiver verhindert werden kann.

Die vorliegende Erfindung betrifft darüber hinaus auch Klebebänder, insbesondere Stripklebebänder, enthaltend eine erfindungsgemäße Klebemasse.

Typische Produktaufbauten sind Klebebänder (Transferklebebänder), Klebefolien und Stanzlinge (Klebestrips). Kommt keine permanent im Klebeband vorhandene Trägerschicht zum Einsatz, dann liegen Schichtdicken der Klebemasseschichten bei mindestens 25 µm und bei bis zu 2 mm. Sehr bevorzugt sind Schichtdicken zwischen etwa 100 µm und etwa 1000 µm. Vielfältige Anwendungsmöglichkeiten sind auch für Klebebänder zwischen etwa 100 µm und etwa 400 µm oder zwischen etwa 500 µm und etwa 800 µm denkbar. Die Reißfestigkeit hängt u. a. von der Schichtdicke ab. Daher sind Schichtdicken von mindestens 400 µm bevorzugt und von mindestens 600 µm sehr bevorzugt, sofern keine weiteren Schichten wie insbesondere permanent im Klebeband vorhandenes Trägermaterial zum Einsatz kommen. Kommen Klebeschichten basierend auf erfindungsgemäßen Klebemassen auf einem im Klebeband permanent vorhandenen Trägermaterial (doppelseitige Klebebänder) zum Einsatz, dann liegen die Schichtdicken dieser Klebeschichten bei mindestens 15 µm und bevorzugt höchstens 250 µm, bevorzugt bei mindestens 50 µm und sehr bevorzugt bei höchstens 150 µm.

Klebefolien können in beiden Dimensionen beliebige Ausmaße annehmen. Klebebänder sind zum Beispiel 2 mm, 5 mm, 10 mm, 20 mm oder 50 mm breit. Klebebänder können zu Rollen gewickelt vorliegen.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Stanzlinge weisen typischerweise eine Länge von mindestens 5 mm auf. Längen können auch bei 10 mm, 20 mm, 50 mm, 100 mm oder darüber liegen. Breiten liegen typischerweise bei mindestens 2 mm. Breiten können auch bei 5 mm, 10 mm, 20 mm, 50 mm oder darüber liegen.

Die Stanzlinge sind üblicherweise länger als breit, wobei die Verstreckung zum Wiederablösen dann vorteilhaft entlang der Längsachse liegt. Alle Winkel der Stanzlinge können 90° betragen oder davon abweichen. Es sind auch Formen möglich, bei denen sich der Stanzling in zumindest eine Richtung verjüngt und insbesondere zu einer Spitze zuläuft. Kanten können auch rund gestaltet sein.

Klebeprodukte, insbesondere Stanzlinge können Anfasserbereiche, die zur Ober- und/ oder Unterseite des Klebestrips nicht klebrig sind, enthalten. Dieser Bereich dient als Anfasser, an dem gezogen wird, um das dehnende Verstrecken, insbesondere in der Verklebungsebene zu erzielen, und ist daher bevorzugt auf beiden Seiten nicht haftklebrig ausgerüstet, insbesondere durch das Aufbringen von Schichten aus Metall, Kunststoff- oder Papier, wie oben beschrieben. Der Anfasserbereich kann jedoch auch durch Bestrahlung, Bepuderung oder Neutralisation der Klebemasse erzeugt werden. Alternativ kann ein Lack oder ein Primer an den entsprechenden Stellen aufgetragen werden. Zudem kann die Oberfläche durch chemische Behandlung wie Ätzen verändert werden, um jeweils nichtklebende Zonen zu erzeugen. Eine Rauigkeit der Anfasserfolie mit einer Rauheit Sₐ von 0,10 bis 2,00 µm, bevorzugt von 0,15 bis 0,50 µm, sorgt für einen guten Klebverbund zwischen Folie und Haftklebstoff und kann daher vorteilhaft zu diesem Zweck ausgewählt werden. Die Rauheit ist dabei gemäß ISO 25178-2:2012(E) Abschnitt 4.1.7 definiert (siehe auch Test XII).

Klebeprodukte werden insbesondere auf einem Trennliner (bevorzugt silikonisiertes Papier oder silikonisierte Folie) bereitgestellt. Der Liner kann einseitig trennend ausgestattet sein. Dann kommt vorteilhaft eine zweite Lage eines Liners zur Abdeckung der zweiten Oberfläche zum Einsatz (vor allem bei Stanzlingen). Der Liner kann auch beidseitig trennend ausgestattet sein. Dann kann mit einer Linerlage gearbeitet werden (vor allem bei Klebebändern).

Schließlich umfasst die vorliegende Erfindung auch die Verwendung der erfindungsgemäßen Klebemasse oder des erfindungsgemäßen Klebebandes zur Verklebung auf Raufasertapete, insbesondere gestrichener Raufasertapete, oder auf Putz, insbesondere auf gestrichenem Putz. Auch für eine Verklebung auf anderen rauen und/oder leicht spaltbaren Oberflächen wie Holz, Vertäfelungen, Furnierhölzern, Strukturtapeten, Paneelen oder Wandtafeln sind Klebemasse und Klebeband der vorliegenden Erfindung besonders geeignet. Typische Rauigkeiten bei Raufasertapete können bei 500 µm oder sogar darüber liegen.

Auch wenn der Kern der Erfindung eindeutig bei der Verwendung der erfindungsgemäßen Haftklebemassen in einschichtigen, sich durch dehnendes Verstrecken im Wesentlichen in der Verklebungsebene rückstands- und zerstörungsfrei wiederablösbaren Haftklebestreifen liegt, so können die erfindungsgemäßen Haftklebemassen auch in sehr geeigneter Weise in mehrschichtigen Haftklebestreifen verwendet werden. Produktdicken mit und ohne Träger können bei mindestens 100 µm und höchstens 2000 µm liegen, bevorzugt bei mindestens 250 µm und höchstens 1500 µm. Auch geringere oder größere Produktdicken sind denkbar.

Daher sind vom erfinderischen Gedanken auch Aufbauten mit einem dehnbaren Träger in der Mitte der Klebestreifen denkbar, wobei die Dehnbarkeit des Trägers ausreichend sein muss, um ein Ablösen des Klebstreifens durch dehnendes Verstrecken zu gewährleisten. Die Dehnbarkeit des Trägers kann dabei gleich der Dehnbarkeit der Klebeschicht, die auf der erfindungsgemäßen Klebemasse basiert, sein oder größer oder geringer als diese. Als Träger können zum Beispiel sehr dehnfähige Folien dienen, die auch geschäumt sein können.

Die erfindungsgemäßen Klebemassen sind allerdings auch auf andersartigen Trägern, die auch nicht dehnbar und/oder nicht geschäumt zu sein brauchen, denkbar. Solche Selbstklebeprodukte sind dann für andere Anwendungen interessant (z. B. doppelseitige Klebebänder mit besonders ausbalancierter Kombination aus Laminierfähigkeit und Scherfestigkeit). Sehr vorteilhaft ist die Kombination erfindungsgemäßer Haftklebemassen mit geschäumten Trägerfolien. Solche geschäumten Trägerfolien unterstützen die gute Haftung auf rauen Oberflächen, da sie dazu beitragen, die Unebenheiten in den Oberflächen auszugleichen.

Mögliche weitere Anwendungen entsprechender Selbstklebebänder finden sich in der DE 42 33 872 A1, DE 195 11 288 A1, US 5,507,464 A, US 5,672,402 A und WO 94/21157 A1, spezielle Ausführungsformen sind zum Beispiel in der DE 44 28 587 A1, DE 44 31 914 A1, WO 97/07172 A1, DE 296 23 112 U1, WO 98/03601 A1 und DE 196 49 636 A1, DE 198 13 081 A1, DE 197 23 177 A1, DE 297 23 198 A1, DE 297 23 614 U1, DE 197 56 084 A1, DE 197 56 816 A1, DE 198 42 864 A1, DE 198 42 865 A1, WO 99/31193 A1, WO 99/37729 A1 und WO 99/63018 A1.

Vorteilhaft lässt sich der erfindungsgemäße Klebestreifen in einem Verbund einsetzen, wobei der Klebestreifen zwischen zwei Substraten verklebt ist, von denen ein Substrat so ausgebildet ist, dass eine Last daran befestigt werden kann. In Form von Klebebändern spricht man dann z. B. von Montageklebebändern. Diese können trägerlos oder trägerhaltig sein, insbesondere einen Schaumträger enthalten.

Das zur Aufnahme einer Last geeignete Substrat kann ein Hakenkörper sein. Dabei wird die aufgrund der Last vom Substrat ausgehende Kippscherbelastung auf den Klebestreifen übertragen.

Besonders vorteilhaft sind erfindungsgemäße Klebemasse bzw. Selbstklebeprodukte auf Basis dieser Klebemasse zur Verklebung auf gestrichener Raufasertapete. Durch die erfindungsgemäße Formulierung werden die Anforderung an Anpassungsfähigkeit (Auffließvermögen) an den rauen Untergrund einerseits und die Anforderungen an Halteleistung andererseits in vorteilhafter Weise ausbalanciert. Dies wird zudem noch kombiniert durch rückstandsfreie Wiederablösbarkeit durch dehnendes Verstrecken. Überraschenderweise eignen sich Klebeschichten basierend auf erfindungsgemäßen Klebemassen auch zur Verklebung auf gestrichenem Putz, zeichnen sich also durch eine, was den Verklebungsuntergrund angeht, recht universelle Verwendungsmöglichkeit aus.

Besonders vorteilhaft für die wiederablösbare Verklebung auf Raufasertapete ist es, wenn erfindungsgemäße Klebemassen als zumindest eine Schicht auf einem Schaumträger in doppelseitigen Selbstklebestrips genutzt werden. Solche Strips können auf einer Seite oder auf beiden Seiten erfindungsgemäße Klebemassen tragen, die wiederum gleich oder verschieden sein können. Bei zwei verschiedenen Klebemassen kann eine Klebemasse aber auch aus der Menge der nicht erfindungsgemäßen Klebemassen ausgewählt werden.

### Testmethoden

### Test I - Molekulargewicht, GPC

Das gewichtsmittlere Molekulargewicht M_{w} wurde mittels Gelpermeationschromatographie (GPC) bestimmt. Als Eluent wurde THF eingesetzt. Die Messung erfolgte bei 23 °C. Als Vorsäule wurde PSS-SDV, 5 µ, 10³ Å, ID 8,0 mm × 50 mm verwendet. Zur Auftrennung wurden die Säulen PSS-SDV, 5 µ, 10³ sowie 10⁴ und 10⁶ mit jeweils ID 8,0 mm × 300 mm eingesetzt. Die Probenkonzentration betrug 4 g/l, die Durchflussmenge 1,0 ml pro Minute. Es wurde gegen PS Standards gemessen. (µ = µm; 1 Å = 10⁻¹⁰ m).

GPC bietet sich zudem als messtechnisches Verfahren zur Bestimmung des Diblock-Anteils an, sofern Herstellerangaben für ein Blockcopolymer nicht zur Verfügung stehen sollten. Für die im Sinne dieser Erfindung einsetzbaren, durch lebende anionische Polymerisation hergestellten Blockcopolymere sind die Molmassenverteilungen typischerweise ausreichend eng, so dass Polymermoden, die sich Triblockcopolymeren einerseits und Diblockcopolymeren andererseits zuordnen lassen, ausreichend voneinander aufgelöst im Elugramm auftreten. Der Diblock-Anteil lässt sich dann als Integral des entsprechenden Molmassensignals quantifizieren, bezogen auf die Summe der Integrale der Molmassensignale der Diblock-Mode und der übrigen Blockcopolymer-Moden (Triblock-Mode oder Mode eines höheren Blockcopolymers).

### Test II - DSC

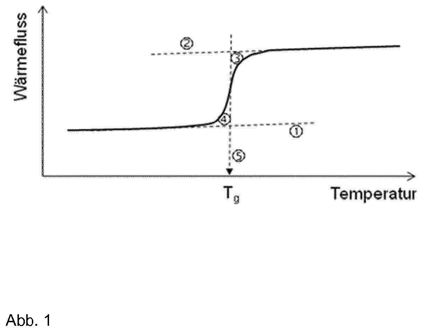

Die Glasübergangstemperatur von Polymerblöcken in Blockcopolymeren wurde mittels dynamischer Scanning Kalorimetrie (DSC) bestimmt. Dazu wurden ca. 5 mg der unbehandelten Blockcopolymerproben in ein Aluminiumtiegelchen (Volumen 25 µL) eingewogen und mit einem gelochten Deckel verschlossen. Zur Messung wurde ein DSC 204 F1 der Firma Netzsch verwendet und unter Stickstoff zur Inertisierung gearbeitet. Die Probe wurde zunächst auf -150 °C abgekühlt, mit einer Heizrate von 10 K/min bis +150 °C aufgeheizt und erneut auf -150 °C abgekühlt. Die sich anschließende zweite Heizkurve wurde erneut bei 10 K/min gefahren und die Änderung der Wärmekapazität aufgenommen. Glasübergänge werden als Stufen im Thermogramm erkannt. Die Glasübergangstemperatur wird folgendermaßen ausgewertet (siehe dazu Figur 1). An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

### Test III - DACP-Wert

Der DACP ist der Diaceton-Trübungspunkt und wird im Rahmen der vorliegenden Erfindung folgendermaßen bestimmt: In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

Zur Bestimmung von DACP-Werten wird zudem auf C. Donker, PSTC Annual Technical Seminar, Proceedings, S. 149-164, Mai 2001, verwiesen.

### Test IV - MMAP-Wert

MMAP ist der gemischte-Methylcyclohexan-Anilin-Trübungspunkt, der unter Verwendung eines modifizierten ASTM C 611-Verfahrens bestimmt wird. Im Rahmen der vorliegenden Erfindung wird der MMAP-Wert bestimmt, indem 5,0 g Testsubstanz, also das zu untersuchende Klebharzmuster, in ein trockenes Probenglas eingewogen und mit 10 mL trockenem Anilin (CAS [62-53-3], ≥ 99,5%, Sigma-Aldrich #51788 oder vergleichbar) und 5 mL trockenem Methylcyclohexan (CAS [108-87-2], ≥ 99%, Sigma-Aldrich #300306 oder vergleichbar) versetzt werden. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

Zur Bestimmung von MMAP-Werten wird zudem auf C. Donker, PSTC Annual Technical Seminar, Proceedings, S. 149-164, Mai 2001, verwiesen.

### Test V - Harzerweichungstemperatur

Die Klebharzerweichungstemperatur wird nach der einschlägigen Methodik durchgeführt, die als Ring & Ball bekannt ist und nach ASTM E28 standardisiert ist.

### Test VI - Schmelzviskosität von Weichharzen

Zur Bestimmung der Schmelzviskosität der Weichharze wurde ein Schubspannungssweep in einem schubspannungsgeregelten DSR 200 N Rheometer der Firma Rheometrics Scientific in Rotation durchgeführt. Es kam ein Kegel/Platte-Messsystem mit einem Durchmesser von 25 mm (Kegelwinkel 0,1002 rad) zur Anwendung, der Messkopf war luftgelagert und geeignet für Normalkraftmessungen. Der Spalt betrug 0,053 mm und die Messtemperatur 25 °C. Die Frequenz wurde von 0,002 Hz bis 200 Hz variiert und die Schmelzviskosität bei 1 Hz registriert.

### Test VII - Kippschertest

Zur Bestimmung der Kippscherfestigkeit wird die zu prüfende 750 µm dicke Klebstofffolie bzw. der trägerhaltige Prüfling der Abmessung 20 mm × 50 mm, welche an einem Ende beidseitig mit einem nicht haftklebrigen Anfasserbereich versehen ist (erhalten durch Aufkaschieren von 25 µm starker biaxial verstreckter Polyesterfolie der Abmessungen 20 mm × 13 mm), zunächst auf eine mit Raufasertapete (Typ Erfurt 52 mit Alpina Weiß gestrichen (Lammfellrolle)) ausgerüsteten Substratplatte verklebt (Andruckzeit = 5 sec). Auf die Rückseite des Klebestreifens wird mittig auf eine Basisplatte aus Stahl der Abmessung 40 mm × 20 mm × 3 mm (Länge × Breite × Dicke) verklebt. Auf die Basisplatte wird ein 10 cm langer Stahlstift aufgesteckt, welcher vertikal auf der Plattenfläche sitzt. Die erhaltenen Probekörper werden mit einer Kraft von 100 N zusammengepresst und 5 min im unbelasteten Zustand belassen. Nach Beaufschlagung der gewählten Kippscherbelastung durch Anhängen eines Gewichtes (10 N bei 20 mm Hebelarm) wird die Zeit bis zum Versagen der Verklebung (= Kippscherstandzeit) ermittelt. Das Testklima ist dabei 23 °C bei einer relativen Luftfeuchtigkeit von 50 %. Für viele Anwendungen gilt je höher die Kippscherstandzeit, desto besser. Sind 20 Tage erreicht, wird der Test abgebrochen und als Ergebnis > 20 Tage notiert.

### Text VIII - Scherstandzeit bei erhöhten Temperaturen

Die Prüfung erfolgt in Anlehnung an PSTC-7 bei 40 °C unter Verwendung eines Gewichtes von 1 kg. Auf ein 250 µm dickes Klebestreifenmuster wird eine Aluminiumfolie mit geätzter Oberfläche als Verstärkungsfolie kaschiert. Ein 1,3 cm breiter Streifen dieses Musters wird auf einem polierten Stahlplättchen auf einer Länge von 2 cm mit einer 2 kg-Rolle durch zweimaliges doppeltes Überrollen verklebt. Die Plättchen werden für 30 min unter Testbedingungen (40 °C), aber ohne Last äquilibriert. Dann wird das Testgewicht (1 kg) angehängt, so dass eine Scherbeanspruchung parallel zur Verklebungsfläche entsteht, und die Zeit gemessen, bis die Verklebung versagt. Die Ergebnisse werden in min angegeben.

### Test IX - Klebkraft PE

Die Untersuchung erfolgt in Anlehnung an PSTC-1. Polyethylen (PE) dient als Modellhaftgrund für die Verklebungsfestigkeit auf unpolarer Anstreichfarbe.

Ein 2 cm breiter und 15 cm langer Streifen des 250 µm dicken Klebebandmusters wird auf einer seiner Klebemassenseiten mit einer 25 µm dicken PET-Folie abgedeckt und mit der anderen Klebebandseite auf eine geschliffene Stahlplatte verklebt. Durch fünfmaliges doppeltes Überrollen mittels einer 4 kg Rolle wird für eine definierte Verklebung gesorgt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Das Prüfklima beträgt 23°C/50% r.H. Die Ergebnisse werden in N/cm angegeben.

### Test X - Stripkraft

Zur Ermittlung der Ablösekraft (Stripkraft) wird eine 750 µm dicke Klebstofffolie der Abmessungen 50 mm * 20 mm (Länge * Breite), mit am oberen Ende nicht haftklebrigem Anfasserbereich, zwischen zwei Stahlplatten (deckungsgleich zueinander angeordnet) der Abmessungen 60 mm × 30 mm mittig verklebt. Die so erhaltenen Probekörper werden mit einer Kraft von 500 N für 5 sec angedrückt und nachfolgend 5 min im unbelasteten Zustand belassen. Die Verklebungen werden 24 h bei 23 °C und 50 % rel. Luftfeuchtigkeit gelagert. Der Klebfolienstreifen wird mit einer Zuggeschwindigkeit von 1000 mm/min parallel zur Verklebungsebene und kontaktfrei (hierzu wird in einem klebefolienfreien Bereich ein Abstandshalter, der der Dicke der zu untersuchenden Klebstofffolie entspricht, zwischen den Stahlplatten eingeschoben) zu den Kantenbereichen der beiden Stahlplatten, herausgelöst. Dabei wird die erforderliche Ablösekraft in N gemessen. Angegeben wird das Maximum der Stripkraftwerte in N/cm.

### Test XI - Zugfestigkeit

Aus einem Muster mit einer Dicke von 750 µm werden Prüfmuster in Hantelform (Prüfstab 5A nach DIN EN ISO 527) ausgestanzt. Diese werden bei 23 °C und 50 % rel. Luftfeuchtigkeit äquilibriert. An den beiden Endstücken wird ein Prüfmuster in eine Zugprüfmaschine eingespannt. Mit einer Geschwindigkeit von 1000 mm/min wird das Prüfmuster gedehnt und dabei die Kraft aufgenommen. Die Zugfestigkeit ist diejenige Kraft, bezogen auf die Querschnittsfläche des Musterns (Stegbreite × Schichtdicke), die bei der Bruchdehnung aufgezeichnet wird. Sie wird in MPa angegeben.

### Test XII - Rauigkeit

Die Oberflächenrauheit der Anfasserschicht wurde mit einem Weißlicht-Interferometer Contour GT^{®} 3D Optical Microscope der Firma Bruker bestimmt. Es lag die ISO 25178-602 zugrunde. Das Gerät wurde im Vertical Scanning- (VSI-) Modus betrieben. Es wurde ein 50x-Objektiv und eine 1x-Feldlinse genutzt, so dass eine fünfzigfache Vergrößerung resultierte. Der Sichtbereich betrug 317 µm × 238 µm. Auf diese Fläche bezieht sich auch die ausgewertete Oberflächenrauheit Sₐ. Aus dem optisch aufgenommenen Höhenprofil wurde aus den Rohdaten gemäß ISO 25178-2:2012 (E) Abschnitt 4.1.7 die Oberflächenrauheit als Mittelwert des 3D-Profils Sₐ erhalten. Sₐ ist das arithmetische Mittel der Beträge der Höhenwerte z aller in der x,y-Ebene des Sichtbereichs liegenden vermessenen Punkte. Es wurden jeweils drei Messungen durchgeführt und der Mittelwert der Einzelmessungen in nm angegeben. Der Abstand der vermessenen Punkte zueinander betrug sowohl in x- als auch in y-Richtung 0,5 µm.

Die vorliegende Erfindung betrifft insbesondere die folgenden Ausführungsformen:
Nach einer ersten Ausführungsform betrifft die Erfindung die Verwendung einer Klebemasse zur Verklebung auf Raufasertapete, insbesondere gestrichener Raufasertapete, Strukturtapeten, Holz, Paneelen, Wandtafeln, Vertäfelungen, Furnierhölzern oder auf Putz, insbesondere gestrichenem Putz, wobei die Klebemasse aus
(a) zumindest einer Elastomerkomponente vom Typ eines Polybutadien-Polyvinylaromaten-Blockcopolymers mit einem Anteil in Bezug auf die Gesamtklebemasse von 42 Gew.-% bis 50 Gew.-% und einem Diblockanteil in Bezug auf den Gesamtblockcopolymergehalt von 32 Gew.-% bis 55 Gew.-%, vorzugsweise bis 50 Gew.-%, wobei die Blockcopolymere eine gewichtsmittlere Molmasse nach Test I wie in der Beschreibung definiert zwischen 50 000 g/mol und 500 000 g/mol aufweisen,
(b) zumindest einem Klebharz, das ein Kohlenwasserstoffharz mit einem DACP-Wert von mindestens +5°C und höchstens +50°C und einem MMAP-Wert von mindestens +50°C und höchstens +85°C ist, und das eine Harzerweichungstemperatur nach Ring & Ball gemäß ASTM E28 von mindestens +90 °C aufweist,
(c) optional zumindest einem Weichharz mit einem Anteil von 0 Gew.-% bis 15 Gew.- %, bezogen auf die Gesamtklebemasse,
(d) optional weiteren Additiven besteht.

Nach einer zweiten Ausführungsform betrifft die Erfindung eine Verwendung nach Ausführungsform 1, dadurch gekennzeichnet, dass sich die Elastomerkomponente der Klebemasse zu mindestens 90 Gew.-%, bezogen auf den Gesamtblockcopolymergehalt, aus mindestens einem Polybutadien-Polyvinylaromaten-Blockcopolymer zusammensetzt, wobei das mindestens eine Polybutadien-Polyvinylaromaten-Blockcopolymer Polymerblöcke, überwiegend gebildet durch Polymerisation von Vinylaromaten (A-Blöcke), vorzugsweise Styrol, und solche, überwiegend gebildet durch Polymerisation von 1,3-Butadien (B-Blöcke), enthält.

Nach einer dritten Ausführungsform betrifft die Erfindung eine Verwendung nach Ausführungsform 1 oder 2, dadurch gekennzeichnet, dass das Klebharz ein Kohlenwasserstoffharz mit einem DACP-Wert von höchstens +45°C ist.

Nach einer vierten Ausführungsform betrifft die Erfindung eine Verwendung nach einer der Ausführungsformen 1 bis 3, dadurch gekennzeichnet dass das Klebharz der Klebemasse ein Kohlenwasserstoffharz mit einem MMAP-Wert von höchstens +80°C ist.

Nach einer fünften Ausführungsform betrifft die Erfindung eine Verwendung nach einer der Ausführungsformen 1 bis 4, dadurch gekennzeichnet dass das Klebharz der Klebemasse ein Kohlenwasserstoffharz mit einer Harzerweichungstemperatur von mindestens +1 10°C, und höchstens +140°C, vorzugsweise höchstens +120°C, ist.

Nach einer sechsten Ausführungsform betrifft die Erfindung eine Verwendung nach einer der Ausführungsformen 1 bis 5, dadurch gekennzeichnet, dass die Klebemasse mindestens 5 Gew.-% und höchstens 15 Gew.-% an dem zumindest einen Weichharz, vorzugsweise höchstens 12 Gew.-%, jeweils bezogen auf die Gesamtklebemasse, enthält.

Nach einer siebten Ausführungsform betrifft die Erfindung eine Verwendung nach einer der Ausführungsformen 1 bis 6, dadurch gekennzeichnet, dass die Klebemasse höchstens 1 Gew.-%, vorzugsweise 0 Gew.-%, bezogen auf die Gesamtklebemasse, niederviskose Weichmacher enthält.

Nach einer achten Ausführungsform betrifft die Erfindung ein Klebeband, insbesondere einen durch dehnendes Verstrecken wiederablösbaren Selbstklebestrip, enthaltend eine Klebemasse wie in einer der Ausführungsformen 1 bis 7 definiert in einer Schichtdicke von mindestens 25 µm bis zu 2 mm ohne eine permanent im Klebeband vorhandene Trägerschicht.

Nach einer neunten Ausführungsform betrifft die Erfindung ein Klebeband enthaltend eine Klebemasse wie in einer der Ausführungsformen 1 bis 7 definiert und einen Schaumträger oder einen Folienträger.

Nach einer zehnten Ausführungsform betrifft die Erfindung die Verwendung des Klebebandes nach der Ausführungsform 8 oder 9 zur Verklebung auf Raufasertapete, insbesondere gestrichener Raufasertapete, Strukturtapeten, Holz, Paneelen, Wandtafeln, Vertäfelungen, Furnierhölzern oder auf Putz, insbesondere gestrichenem Putz.

### Beispiele

### Musterpräparation

Alle Knetmassen wurden in einem beheizbaren Doppelsigmakneter der Firma Aachener Maschinenbau Küpper Typ III-P1 hergestellt. Der Mantel des Kneters wurde durch ein Thermalölheizbad der Firma Lauda erwärmt. Hierbei wurde eine Badtemperatur von 190°C eingestellt. Während des gesamten Knetvorgangs lag eine COs-Schutzgasatmosphäre an. Der Kneter wurde bei 50 U/min betrieben.

Zunächst wurden die Elastomere zusammen mit dem festen Alterungsschutzmittel Irganox 1010 eingewogen und im Kneter vorgelegt. Danach wurden etwa 10 % der Menge an Festharz zugegeben und für 15 Minuten geknetet. Nachfolgend wurde im Abstand von jeweils 10 Minuten jeweils ein Drittel der verbleibenden Menge an Klebharz sowie schließlich Weichharz zugegeben und eingearbeitet.

Nach Abschluss des Knetvorgangs wurden die Knetmassen dem Kneter entnommen und erkalteten auf Raumtemperatur.

Die erkalteten Massen wurden zwischen zwei Lagen silikonisiertem Trennpapier positioniert und mit einer Heißpresse der Firma Lauffer GmbH & CO KG Typ RLKV 25 bei 130 °C zu Handmustern mit einer Schichtdicke von 100 µm, 150 µm, 250 µm, 400 µm oder 650 µm (je nach durchzuführendem Test) verpresst. Die Klebeschichten werden je nach Test auf ein Trägermaterial laminiert. Dies erfolgte manuell mit einer Gummirolle. Danach wurden die Muster 2 Wochen bei 23 °C und 50 % rel. Luftfeuchtigkeit gelagert, um eine gute Verankerung der Klebeschichten auf dem Schaumträger zu gewährleisten.

### Eingesetzte Rohstoffe

***) cf. Produktinformation Kraton "The Global Connection for Polymer and Compound Solutions - Product and Application Guide" (KPP/TPG/2011) von 2011.**

| | | Typ | Hersteller | Charakterisierung |
|---|---|---|---|---|
| Elastomere | Kraton D1102 AS | Polystyrol-Polybutadien Blockcopolymer | Kraton Polymers | Triblockcopolymer mit 17 %* Diblock |
| | Kraton D1118 ES | Polystyrol-Polybutadien Blockcopolymer | Kraton Polymers | Triblockcopolymer mit 78 %* Diblock |
| Klebharze | Dercolyte A115 | α-Pinen Harz | DRT | |
| | Piccolyte A115 | α-Pinen Harz | Pinova | |
| Weichharze | Wingtack 10 | C5-Harz | Cray Valley | |
| Alterungsschutzmittel | Irganox 1010 | Sterisch gehindertes Phenol | BASF | |

| Beispiel 1.1 Nicht erfindungsgemäß | | Gew.-% |
|---|---|---|
| Elastomer | Kraton D1102 AS | 39,5 % |
| | Kraton D1118 ES | 15,0 % |
| Klebharz | Dercolyte A115 | 43,0 % |
| Weichharz | Wingtack 10 | 2,0 % |
| Weitere Bestandteile | Irganox 1010 | 0,5 % |

| Beispiel 1.2 Erfindungsgemäß | | Gew.-% |
|---|---|---|
| Elastomer | Kraton D1102 AS | 21,5 % |
| | Kraton D1118 ES | 28,0 % |
| Klebharz | Dercolyte A115 | 45,0 % |
| Weichharz | Wingtack 10 | 5,0 % |
| Weitere Bestandteile | Irganox 1010 | 0,5 % |

| Beispiel 1.3 Erfindungsgemäß | | Gew.-% |
|---|---|---|
| Elastomer | Kraton D1102 AS | 25,0 % |
| | Kraton D1118 ES | 20,0 % |
| Klebharz | Piccolyte A115 | 44,5 % |
| Weichharz | Wingtack 10 | 10,0 % |
| Weitere Bestandteile | Irganox 1010 | 0,5 % |

| Beispiel 1.4 Erfindungsgemäß | | Gew.-% |
|---|---|---|
| Elastomer | Kraton D1102 AS | 27,5 % |
| | Kraton D1118 ES | 16,5 % |
| Klebharz | Piccolyte A115 | 46,0 % |
| Weichharz | Wingtack 10 | 9,5 % |
| Weitere Bestandteile | Irganox 1010 | 0,50 % |

| Beispiel 1.5 Vergleich | | Gew.-% |
|---|---|---|
| Elastomer | Kraton D1102 AS | 40,0 % |
| | Kraton D1118 ES | 21,0 % |
| Klebharz | Dercolyte A115 | 32,0 % |
| Weichharz | Wingtack 10 | 6,5 % |
| Weitere Bestandteile | Irganox 1010 | 0,50 % |

| Beispiel 1.6 Vergleich | | Gew.-% |
|---|---|---|
| Elastomer | Kraton D1102 AS | 45,0 % |
| Klebharz | Piccolyte A115 | 44,5 % |
| Weichharz | Wingtack 10 | 10,0 % |
| Weitere Bestandteile | Irganox 1010 | 0,50 % |

| Beispiel 1.7 Vergleich | | Gew.-% |
|---|---|---|
| Elastomer | Kraton D1102 AS | 34,5 % |
| | Kraton D1118 ES | 7,0 % |
| Klebharz | Piccolyte A115 | 38,0 % |
| Weichharz | Wingtack 10 | 20,0 % |
| Weitere Bestandteile | Irganox 1010 | 0,50 % |

| Beispiel 1.8 Vergleich | | Gew.-% |
|---|---|---|
| Elastomer | Kraton D1102 AS | 42,0 % |
| | Kraton D1118 ES | 10,0 % |
| Klebharz | Dercolvte A115 | 43,5 % |
| Weichharz | Wingtack 10 | 4,0 % |
| Weitere Bestandteile | Alterungsschutzmittel | 0,50 % |

| Beispiel 1.9 Vergleich | | Gew.-% |
|---|---|---|
| Elastomer | Kraton D1102 AS | 38,0 % |
| | Kraton D1118 ES | 15,0 % |
| Klebharz | Dercolyte A115 | 46,5 % |
| Weitere Bestandteile | Alterungsschutzmittel | 0,50 % |

| Beispiel 1.10 Vergleich | | Gew.-% |
|---|---|---|
| Elastomer | Kraton D1102 AS | 20,0 % |
| | Kraton D1118 ES | 20,0 % |
| Klebharz | Dercolyte A115 | 57,5 % |
| Weichharz | Wingtack 10 | 2,0 % |
| Weitere Bestandteile | Alterungsschutzmittel | 0,50 % |

| Beispiel 1.11 | | Gew.-% |
|---|---|---|
| Erfindungsgemäß | | |
| Elastomer | Kraton D1102 AS | 24,0 % |
| | Kraton D1118 ES | 18,0 % |
| Klebharz | Dercolyte A115 | 45,5 % |
| Weichharz | Wingtack 10 | 12,0 % |
| Weitere Bestandteile | Alterungsschutzmittel | 0,50 % |

### Messergebnisse der Parameter:

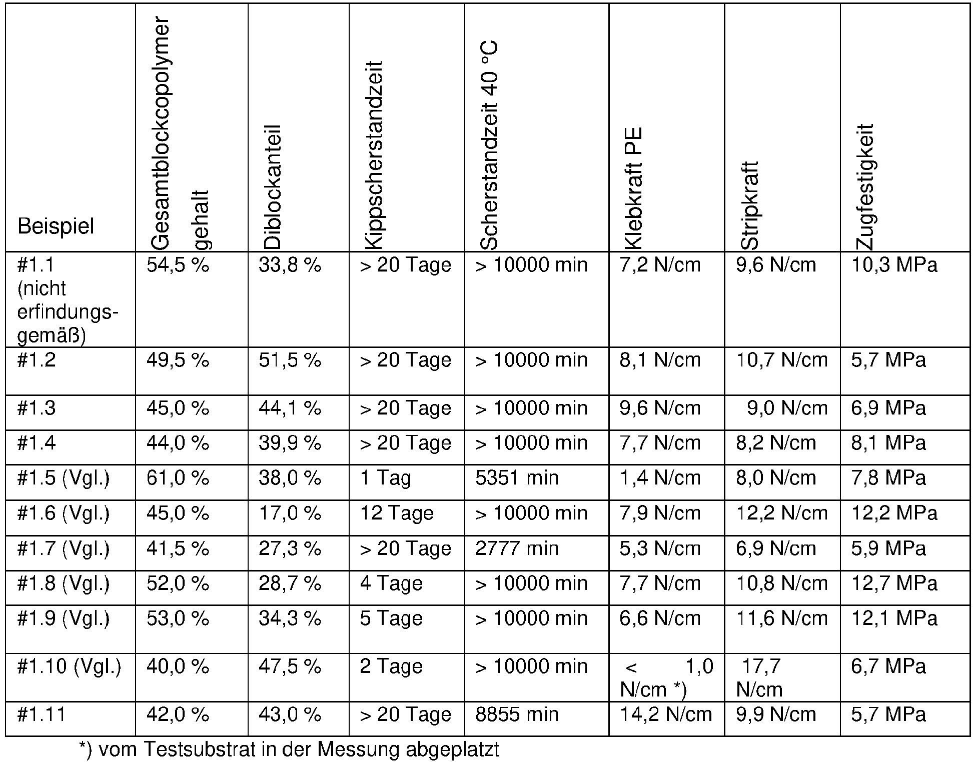

Beispiele 1.2 bis 1.4 zeigen, dass Formulierungen mit erfindungsgemäßen Zusammensetzungen die gestellten Anforderungen erfüllen. Vergleichsbeispiel 1.5 zeigt, dass ein zu hoher Gesamtblockcopolymergehalt nachteilig ist, auch wenn der Diblock-Anteil im im Sinne dieser Erfindung vorteilhaften Bereich liegt. Vergleichsbeispiele 1.6 und 1.8 zeigen, dass die Halteleistung auf Raufasertapete nicht erreicht wird, wenn eine Zusammensetzung mit zu geringem Diblock-Anteil gewählt wird. Vergleichsbeispiel 1.7 zeigt, dass ein zu hoher Anteil an Weichharz die Wärmescherfestigkeit nachteilig beeinflusst.

Aus Vergleichsbeispiel 1.9 ist zu erkennen, dass ein zu hoher Gehalt an Blockcopolymer innerhalb der Elastomerkomponente zu einer deutlichen Reduktion der Halteleistung auf Tapete führt. Diese Formulierung führt vor Augen, wie anspruchsvoll die Aufgabe ist, Bestandteile so auszutarieren, dass anforderungsgemäße Kippscherfestigkeit erreicht wird. Obwohl die statische Scherfestigkeit bei 40 °C und die Klebkraft auf PE beide auf anforderungsgerechtem Niveau liegen, sind die dissipativen und elastischen Anteile der Klebemasse für genügende Kippscherfestigkeit offenbar nicht ausreichend ausbalanciert. Nicht ausreichende Halteleistung auf Tapete wird ebenfalls gefunden, wenn der Blockcopolymergehalt zu gering ist (Vergleichsbeispiel 1.10). Dies kann durch eine geringer ausgeprägte Kohäsion erklärt werden. Insgesamt ist eine Formulierung dieser Art bereits sehr steif, was sich auch in der unzureichenden Verklebungsfähigkeit auf PE zeigt, wo ein Abplatzen des Klebebands bereits zu Beginn des Schälversuchs zu beobachten ist. Das erfindungsgemäße Beispiel 1.11 schließlich zeigt, dass bei einem geringfügig gesteigerten Blockcopolymeranteil die geforderte Kippscherfestigkeit erreicht wird.

Beispiele 1.2 bis 1.4 zeigen Eigenschaften von Formulierungen in der Verwendung als trägerfreie einschichtige Selbstklebeprodukte. Erfindungsgemäße Formulierungen eignen sich jedoch auch hervorragend in Kombination mit Trägermaterialien. Um dies aufzuzeigen, seien Beispiele 2.1 bis 2.7 aufgeführt.

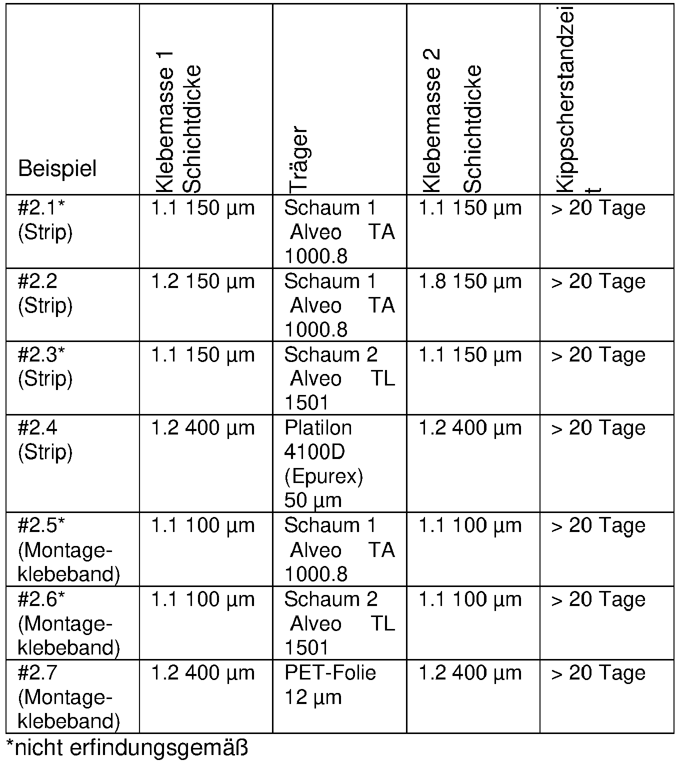

## Patentansprüche

1. Verwendung einer Klebemasse zur Verklebung auf Raufasertapete, insbesondere gestrichener Raufasertapete, Strukturtapeten, Holz, Paneelen, Wandtafeln, Vertäfelungen, Furnierhölzern oder auf Putz, insbesondere gestrichenem Putz, wobei die Klebemasse besteht aus
(a) zumindest einer Elastomerkomponente vom Typ eines Polybutadien-Polyvinylaromaten-Blockcopolymers mit einem Anteil in Bezug auf die Gesamtklebemasse von 42 Gew.-% bis 50 Gew.-% und einem Diblockanteil in Bezug auf den Gesamtblockcopolymergehalt von 32 Gew.-% bis 55 Gew.-%, vorzugsweise bis 50 Gew.-%, wobei die Blockcopolymere eine gewichtsmittlere Molmasse nach Test I wie in der Beschreibung definiert zwischen 50 000 g/mol und 500 000 g/mol aufweisen,
(b) zumindest einem Klebharz, das ein Kohlenwasserstoffharz mit einem DACP-Wert von mindestens +5°C und höchstens +50°C und einem MMAP-Wert von mindestens +50°C und höchstens +85°C ist, und das eine Harzerweichungstemperatur nach Ring & Ball gemäß ASTM E28 von mindestens +90 °C aufweist,
(c) zumindest einem Weichharz mit einem Anteil von 0 Gew.-% bis 15 Gew.-%, bezogen auf die Gesamtklebemasse,
(d) optional weiteren Additiven.

2. Verwendung nach Anspruch 1, **dadurch gekennzeichnet, dass** sich die Elastomerkomponente zu mindestens 90 Gew.-%, bezogen auf den Gesamtblockcopolymergehalt, aus mindestens einem Polybutadien-Polyvinylaromaten-Blockcopolymer zusammensetzt, wobei das mindestens eine Polybutadien-Polyvinylaromaten-Blockcopolymer Polymerblöcke, überwiegend gebildet durch Polymerisation von Vinylaromaten (A-Blöcke), vorzugsweise Styrol, und solche, überwiegend gebildet durch Polymerisation von 1,3-Butadien (B-Blöcke), enthält.

3. Verwendung nach Anspruch 1 oder 2, **dadurch gekennzeichnet, dass** das Klebharz ein Kohlenwasserstoffharz mit einem DACP-Wert von höchstens +45°C ist.

4. Verwendung nach einem der Ansprüche 1 bis 3, **dadurch gekennzeichnet dass** das Klebharz ein Kohlenwasserstoffharz mit einem MMAP-Wert von höchstens +80°C ist.

5. Verwendung nach einem der Ansprüche 1 bis 4, **dadurch gekennzeichnet dass** das Klebharz ein Kohlenwasserstoffharz mit einer Harzerweichungstemperatur von mindestens +110°C, und höchstens +140°C, vorzugsweise höchstens +120°C, ist.

6. Verwendung nach einem der Ansprüche 1 bis 5, **dadurch gekennzeichnet, dass** die Klebemasse mindestens 5 Gew.-% und höchstens 15 Gew.-% an dem zumindest einen Weichharz, vorzugsweise höchstens 12 Gew.-%, jeweils bezogen auf die Gesamtklebemasse, enthält.

7. Verwendung nach einem der Ansprüche 1 bis 6, **dadurch gekennzeichnet, dass** die Klebemasse höchstens 1 Gew.-%, vorzugsweise 0 Gew.-%, bezogen auf die Gesamtklebemasse, niederviskose Weichmacher enthält.

8. Klebeband, insbesondere durch dehnendes Verstrecken wiederablösbarer Selbstklebestrip, enthaltend eine Klebemasse wie in einem der Ansprüche 1 bis 7 definiert in einer Schichtdicke von mindestens 25 µm bis zu 2 mm ohne eine permanent im Klebeband vorhandene Trägerschicht.

9. Klebeband enthaltend eine Klebemasse wie in einem der Ansprüche 1 bis 7 definiert und einen Schaumträger oder einen Folienträger.

10. Klebeband zur wiederablösbaren Verklebung auf Raufasertapete enthaltend eine Klebemasse wie in einem der Ansprüche 1 bis 7 definiert und einen Schaumträger, wobei die Klebemasse als zumindest eine Schicht jeweils auf beiden Seiten des Schaumträgers aufgetragen ist und wobei die Klebemassen auf beiden Seiten gleich oder verschieden sind.

11. Klebeband zur wiederablösbaren Verklebung auf Raufasertapete umfassend einen Schaumträger, der beidseitig mit zwei unterschiedlichen Klebemassen beschichtet ist, wobei auf einer Seite des Schaumträgers eine Klebemasse wie in einem der Ansprüche 1 bis 7 definiert aufgetragen ist und auf der anderen Seite des Schaumträgers eine von der Definition der Ansprüche 1 bis 7 abweichende Klebemasse aufgetragen ist.

12. Verbund aus zwei Substraten und einem zwischen diesen verklebten Klebeband nach einem der Ansprüche 8 bis 11, **dadurch gekennzeichnet, dass** das eine Substrat so ausgebildet ist, dass eine Last daran befestigt werden kann und das andere Substrat vorzugsweise eine Raufasertapetenoberfläche ist.

13. Verbund nach Anspruch 12, **dadurch gekennzeichnet, dass** das Substrat, das so ausgebildet ist, dass eine Last daran befestigt werden kann, ein Hakenkörper ist.

## Claims

1. Use of an adhesive for bonding to woodchip wallpaper, more particularly coated woodchip wallpaper, textured wallpapers, wood, panels, wall boards, wainscoting, veneered woods, or to plaster, more particularly coated plaster, the adhesive consisting of
(a) at least one elastomer component of the type of a polybutadiene-polyvinylaromatic block copolymer having a fraction in relation to the total adhesive of 42 wt% to 50 wt% and a diblock fraction in relation to the total block copolymer content of 32 wt% to 55 wt%, preferably to 50 wt%, where the block copolymers have a weight-average molar mass by Test 1 as defined in the description of between 50 000 g/mol and 500 000 g/mol,
(b) at least one tackifier resin which is a hydrocarbon resin having a DACP of at least +5°C and at most +50°C and an MMAP of at least +50°C and at most +85°C, and which has a resin softening temperature by ring & ball according to ASTM E28 of at least +90°C,
(c) at least one plasticizing resin having a fraction of 0 wt% to 15 wt%, based on the total adhesive,
(d) optionally further additives.

2. Use according to Claim 1, **characterized in that** the elastomer component is composed to an extent of at least 90 wt%, based on the total block copolymer content, of at least one polybutadiene-polyvinylaromatic block copolymer, where the at least one polybutadiene-polyvinylaromatic block copolymer comprises polymer blocks predominantly formed by polymerization of vinylaromatics (A blocks), preferably styrene, and polymer blocks predominantly formed by polymerization of 1,3-butadiene (B blocks).

3. Use according to Claim 1 or 2, **characterized in that** the tackifier resin is a hydrocarbon resin having a DACP of at most +45°C.

4. Use according to any of Claims 1 to 3, **characterized in that** the tackifier resin is a hydrocarbon resin having an MMAP of at most +80°C.

5. Use according to any of Claims 1 to 4, **characterized in that** the tackifier resin is a hydrocarbon resin having a resin softening temperature of at least +110°C, and at most +140°C, preferably at most +120°C.

6. Use according to any of Claims 1 to 5, **characterized in that** the adhesive comprises at least 5 wt% and at most 15 wt% of the at least one plasticizing resin, preferably at most 12 wt%, based in each case on the total adhesive.

7. Use according to any of Claims 1 to 6, **characterized in that** the adhesive comprises at most 1 wt%, preferably 0 wt%, based on the total adhesive, of low-viscosity plasticizers.

8. Adhesive tape, more particularly self-adhesive strip redetachable by extensive stretching, comprising an adhesive as defined in any of Claims 1 to 7 in a layer thickness of at least 25 µm up to 2 mm without a carrier layer present permanently in the adhesive tape.

9. Adhesive tape comprising an adhesive as defined in any of Claims 1 to 7 and a foam carrier or a film carrier.

10. Adhesive tape for redetachable bonding to woodchip wallpaper, comprising an adhesive as defined in any of Claims 1 to 7 and a foam carrier, the adhesive being applied as at least one layer on each of both sides of the foam carrier and the adhesives on both sides being identical or different.

11. Adhesive tape for redetachable bonding to woodchip wallpaper, comprising a foam carrier coated on both sides with two different adhesives, one side of the foam carrier bearing an applied adhesive as defined in any of Claims 1 to 7 and the other side of the foam carrier bearing an applied adhesive differing from the definition of Claims 1 to 7.

12. Assembly composed of two substrates and bonded therebetween an adhesive tape according to any of Claims 8 to 11, **characterized in that** one substrate is configured such that a load can be affixed to it and the other substrate is preferably a woodchip wallpaper surface.

13. Assembly according to Claim 12, **characterized in that** the substrate configured such that a load can be affixed to it is a hook body.

## Revendications

1. Utilisation d'une masse adhésive pour un collage sur du papier peint à fibres rugueuses, en particulier du papier peint à fibres rugueuses peint, des papiers peints structurés, du bois, des panneaux, des tableaux muraux, des lambris, des placages en bois ou sur un enduit, en particulier un enduit peint, la masse adhésive étant constituée de
(a) au moins un composant élastomérique du type d'un copolymère à blocs de polybutadiène-poly(composés aromatiques vinyliques) en une proportion par rapport à la masse adhésive totale de 42 % en poids à 50 % en poids et en une proportion de dibloc par rapport à la teneur totale en copolymère à blocs de 32 % en poids à 55 % en poids, de préférence jusqu'à 50 % en poids, les copolymères à blocs présentant une masse molaire moyenne en poids d'après le test 1 défini comme dans la description comprise entre 50 000 g/mole et 500 000 g/mole,
(b) au moins une résine adhésive, qui est une résine d'hydrocarbure comportant une valeur DACP d'au moins +5 °C et d'au plus +50 °C et une valeur MMAP d'au moins +50 °C et d'au plus +85 °C, et qui présente une température de ramollissement de résine d'après la méthode à anneau et à bille selon la norme ASTM E28 d'au moins +90 °C,
(c) au moins une résine molle en une proportion de 0 % en poids à 15 % en poids, par rapport à la masse adhésive totale,
(d) éventuellement d'autres additifs.

2. Utilisation selon la revendication 1, **caractérisée en ce que** le composant élastomérique est composé d'au moins 90 % en poids, par rapport à la teneur totale en copolymère à blocs, d'au moins un copolymère à blocs de polybutadiène-poly(composés vinyliques aromatiques), l'au moins un copolymère à blocs de polybutadiène-poly(composés vinyliques aromatiques) contenant des blocs de polymère formés majoritairement par polymérisation de composés vinyliques aromatiques (blocs A), de préférence le styrène, et de ceux formés majoritairement par polymérisation de 1,3-butadiène (blocs B).

3. Utilisation selon la revendication 1 ou 2, **caractérisée en ce que** la résine adhésive est une résine d'hydrocarbure comportant une valeur DACP d'au plus +45 °C.

4. Utilisation selon l'une quelconque des revendications 1 à 3, **caractérisée en ce que** la résine adhésive est une résine d'hydrocarbure comportant une valeur MMAP d'au plus +80 °C.

5. Utilisation selon l'une quelconque des revendications 1 à 4, **caractérisée en ce que** la résine adhésive est une résine d'hydrocarbure dotée d'une température de ramollissement de résine d'au moins +110 °C, et d'au plus +140 °C, préférablement d'au plus +120 °C.

6. Utilisation selon l'une quelconque des revendications 1 à 5, **caractérisée en ce que** la masse adhésive contient au moins 5 % en poids et au plus 15 % de l'au moins une résine molle, de préférence au plus 12 % en poids, à chaque fois par rapport à la masse adhésive totale.

7. Utilisation selon l'une quelconque des revendications 1 à 6, **caractérisée en ce que** la masse adhésive contient au plus 1 % en poids, de préférence 0 % en poids, par rapport à la masse adhésive totale, de plastifiants à faible viscosité.

8. Ruban adhésif, en particulier bande autoadhésive redécollable par étirage d'extension, contenant une masse adhésive comme définie dans l'une quelconque des revendications 1 à 7 en une épaisseur de couche d'au moins 25 µm jusqu'à 2 mm sans une couche de support présente en permanence dans le ruban adhésif.

9. Ruban adhésif contenant une masse adhésive comme définie dans l'une quelconque des revendications 1 à 7 et un support en mousse ou un support en feuille.

10. Ruban adhésif pour un collage redécollable sur un papier peint à fibres rugueuses contenant une masse adhésive comme définie dans l'une quelconque des revendications 1 à 7 et un support en mousse, la masse adhésive étant appliquée comme au moins une couche à chaque fois sur les deux côtés du support en mousse et les masses adhésives sur les deux côtés étant identiques ou différentes.

11. Ruban adhésif pour un collage redécollable sur un papier peint à fibres rugueuses comprenant un support en mousse, qui est revêtu sur les deux côtés par deux masses adhésives différentes, une masse adhésive comme définie dans l'une quelconque des revendications 1 à 7 étant appliquée sur un côté du support en mousse et une masse adhésive différente de la définition des revendications 1 à 7 étant appliquée sur l'autre côté du support en mousse.

12. Composite composé de deux substrats et d'un ruban adhésif selon l'une quelconque des revendications 8 à 11 collé entre ceux-ci, **caractérisé en ce qu'**un substrat est formé de telle manière qu'une charge peut y être fixée et l'autre substrat est de préférence une surface de papier peint à fibres rugueuses.

13. Composite selon la revendication 12, **caractérisé en ce que** le substrat qui est formé de telle manière qu'une charge peut y être fixée est un corps de crochet.
